# EUROPEAN PATENT SPECIFICATION

(11) **EP 3 546 901 B1**
(45) Date of publication and mention of the grant of the patent: **10.05.2023**
(21) Application number: 19165876.4
(22) Date of filing: 28.03.2019
(51) Int. Cl.: G01H 1/00

(54) **SYSTEMS AND METHODS FOR ENGINE VIBRATION MONITORING**
SYSTEME UND VERFAHREN ZUR MOTORVIBRATIONSÜBERWACHUNG
SYSTÈMES ET PROCÉDÉS DE SURVEILLANCE DE VIBRATIONS DE MOTEUR

(30) Priority: 28.03.2018 US 201815938104
(43) Date of publication of application: 02.10.2019
(73) Proprietor: Pratt & Whitney Canada Corp., Longueuil, Québec J4G 1A1 (CA)
(72) Inventor: CHIASSON, Matthew, (01BE5) Longueuil, Québec J4G 1A1 (CA); KRYNSKI, Michael, (01BE5) Longueuil, Québec J4G 1A1 (CA); HAFEEZ, Faran, (01BE5) Longueuil, Québec J4G 1A1 (CA); ZHU, Li, (01BE5) Longueuil, Québec J4G 1A1 (CA)
(74) Representative: Dehns

(56) References cited:
- EP-A1- 3 103 968
- WO-A1-2012/070365
- US-A- 4 238 960
- US-A- 6 027 239
- US-A1- 2004 034 483
- US-A1- 2004 249 520
- US-A1- 2007 250 245
- US-B1- 6 301 572
- US-B2- 6 768 938

## Description

### TECHNICAL FIELD

The present disclosure relates generally to engines, and more specifically to monitoring of vibrations of an engine.

### BACKGROUND OF THE ART

During operation, an engine outputs energy in a variety of ways: though the primary goal can be to cause the rotation of a shaft or other element, the engine also creates sound, heat, and vibrations, all of which are forms of waste energy, and which can damage and/or degrade the performance of the engine. Specifically with respect to vibration, certain patterns of vibration can be indicative of engine failure, or of a need for engine maintenance.

Traditional approaches for detecting and measuring vibrations in certain kinds of engines, for example aircraft engines, require the use of additional hardware, and can only be performed when the aircraft is on the ground or not deployed on a flight mission. For example, in the case of aircraft, an "engine vibration monitoring system" or EVMS is connected to the engine during an aircraft maintenance procedure. In some cases, this requires temporary sensors to be affixed to the engine, and the EVMS must be connected to a control system of the engine in order to extract additional information about the operation of the engine. This can be both burdensome and expensive for maintenance crews.

Thus, improvements may be needed.

US 6 027 239 A discloses an on-board engine trim balance display and interface.

US 2004/034483 A1 discloses vibration monitoring of one engine by altering a center frequency of a bandpass filter according to target frequency derived from a speed signal of the engine, but not reducing an output power of a multi-spool engine and increasing an output power of other engines of a group of collaborating engines based on the amplitude of the first filtered vibration signal from a first spool of the multi-spool engine or based on the amplitude of the second filtered vibration signal of a second spool of the multi-spool engine using a FADEC system.

### SUMMARY

In accordance with a first aspect of the present invention, there is provided a method as set forth in claim 1.

In accordance with another aspect of the present invention, there is provided a system as set forth in claim 8.

Features of embodiments are recited in the dependent claims.

In a further embodiment of any of the above, adjusting the at least one operational parameter of the engine comprises adjusting an engine output power.

In a further embodiment of any of the above, determining the vibration amplitude of the engine comprises determining a peak-to-peak magnitude of the filtered vibration signal.

In a further embodiment of any of the above, the method further comprises determining, based on the filtered vibration signal being indicative of irregular vibration amplitudes, whether a fan-blade-off event has occurred, the fan-blade-off event indicative of a mechanical failure of a fan of the engine; and responsive to determining that the fan-blade-off event has occurred, implementing at least one corrective measure for the engine.

In a further embodiment of any of the above, the method further comprises, responsive to determining that the fan-blade-off event has occurred, producing an alert for an operator of the engine.

In a further embodiment of any of the above, the method further comprises determining a phase of vibration for the engine based on the filtered vibration signal.

In a further embodiment of any of the above, determining the phase of vibration comprises comparing a peak frequency for the filtered vibration signal against a position of a missing tooth on a rotating component within the engine.

In an embodiment, the instructions are further executable for adjusting at least one operational parameter of the engine based on the vibration amplitude of the engine.

In a further embodiment of any of the above, determining the vibration amplitude of the engine comprises determining a peak-to-peak magnitude of the filtered vibration signal.

In a further embodiment of any of the above, the instructions are further executable for: determining, based on the filtered vibration signal being indicative of irregular vibration amplitudes, whether a fan-blade-off event has occurred, the fan-blade-off event indicative of a mechanical failure of a fan of the engine; and responsive to determining that the fan-blade-off event has occurred, implementing at least one corrective measure for the engine.

In a further embodiment of any of the above, the instructions are further executable for, responsive to determining that the fan-blade-off event has occurred, producing an alert for an operator of the engine.

Features of the systems, devices, and methods described herein may be used in various combinations, in accordance with the embodiments described herein.

### BRIEF DESCRIPTION OF THE DRAWINGS

Reference is now made to the accompanying figures in which:
Figure 1 is a schematic cross-sectional view of an example gas turbine engine;
Figure 2 is a flowchart of an example method for monitoring vibration in an engine;
Figure 3 is a block diagram of an example computer system for implementing part or all of the method of Figure 2; and
Figure 4 is a block diagram of an example engine vibration monitoring system.

It will be noted that throughout the appended drawings, like features are identified by like reference numerals.

### DETAILED DESCRIPTION

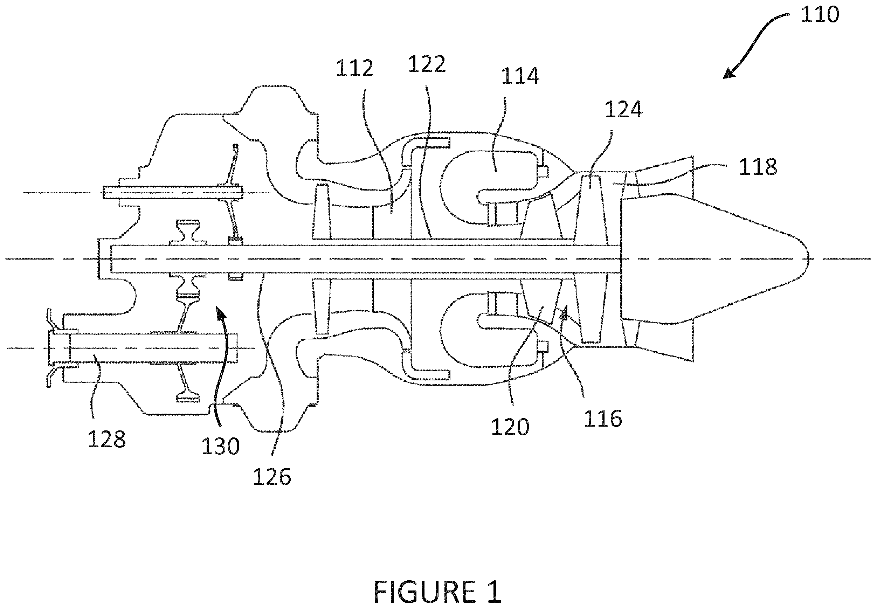

FIG. 1 illustrates a gas turbine engine 110. In some embodiments, the engine 110 is use for of a type preferably provided for use in subsonic flight, generally comprising in serial flow communication, a compressor section 112 for pressurizing the air, a combustor 114 in which the compressed air is mixed with fuel and ignited for generating an annular stream of hot combustion gases, and a turbine section 116 for extracting energy from the combustion gases. The combustion gases flowing out of the combustor 114 circulate through the turbine section 116 and are expelled through an exhaust duct 118. The turbine section 116 includes a compressor turbine 120 in driving engagement with the compressor section 112 through a high pressure shaft 122, and a power turbine 124 in driving engagement with a power shaft 126. The power shaft 126 is in driving engagement with an output shaft 128 through a gearbox 130, which may be a reduction gearbox. The engine 110 may be equipped with one or more sensors, which may measure pressure, temperature, speed, angular velocity, torque, vibration, and the like.

Although illustrated as a turboshaft engine, the engine 110 may alternatively be another type of engine, for example a turbofan engine, also generally comprising, in serial flow communication, a compressor section, a combustor, and a turbine section, and a fan through which ambient air is propelled. A turboprop engine may also apply. In addition, although the sensor-related applications discussed herein pertain primarily to the engine 110 and flight applications, it should be understood that other uses, such as industrial, commercial, or the like, may apply. For example, the techniques described herein could be applied to other types of machines or devices which experience vibration in one form or another.

In operation, vibrations can be produced by one or more rotating components of the engine 110 which affect the engine 110 itself and other components to which the engine 110 is coupled. Generally speaking, the vibrations produced by the engine 110 are a result of the rotational motion of various components within the engine, including the shafts 122, 126, 128. Although a certain degree of vibration is expected, and indeed normal, levels of vibration which exceed certain thresholds can cause damage to the engine 110, or to other components to which the engine 110 is coupled. An operator of the engine 110, if informed of the vibration patterns of the engine 110, can take steps to mitigate or alleviate some of the damaging aspects of the vibration of the engine 110, or can request maintenance of the engine 110 before a subsequent use.

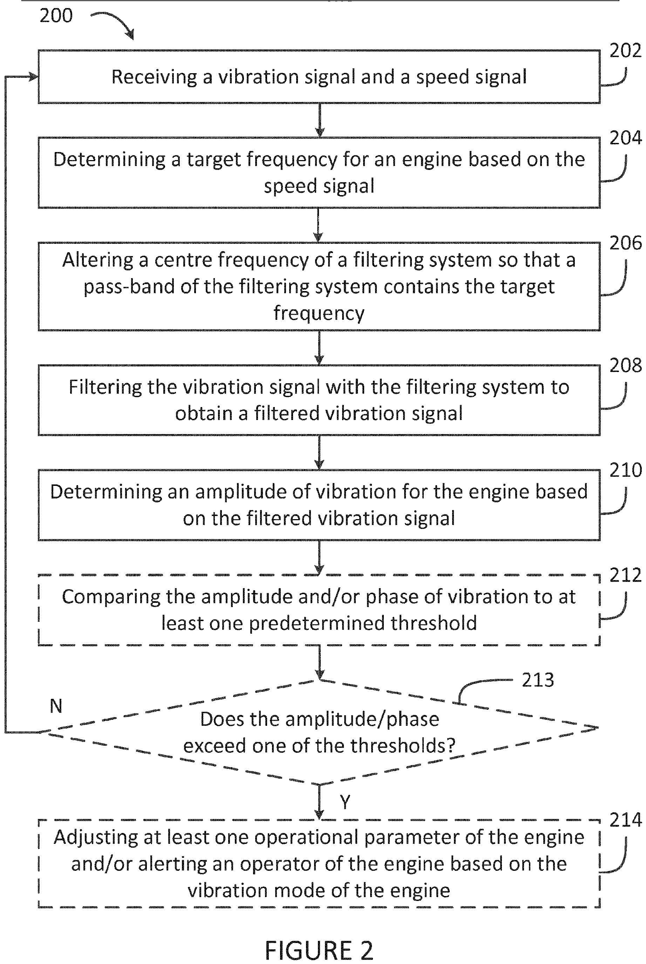

With reference to Figure 2, there is illustrated a method 200 for monitoring vibration in an engine, for example the engine 110. At step 202, a vibration signal, for example from one or more sensors coupled to the engine 110, and a speed signal, representative of an operating speed of the engine 110, are received. The vibration signal is primarily indicative of vibrations produced by the engine 110. However, it should be noted that the vibration signal can additionally contain information relating to vibrations not caused by the engine 110.

In some embodiments, a plurality of vibration sensors are affixed to the engine 110, for example 3 unidirectional vibration sensors, each configured to measure vibration of the engine 110 in a different axis. The vibration sensors can be any suitable type of sensor, and can be affixed to the engine, or to other components proximate thereto, in any suitable fashion. In some embodiments, each of the vibration sensors sends a distinct vibration signal; in other embodiments, outputs from the vibration sensors are combined into a single vibration signal. Still other embodiments for the vibration signal are considered.

The speed signal can be received from any suitable component within the engine 110 or forming part of a control system for the engine 110. In some embodiments, the speed signal is representative of a rotational speed of one of the shafts 122, 126, 128 of the engine 110, for example the output shaft 128. In other embodiments, a control system for the engine 110 provides the speed signal. For example, if the engine 110 is used in an aircraft, a control system for the engine, in this instance a full-authority digital engine control (FADEC), can provide or obtain the speed signals, for instance based on an airspeed of the engine 110.

The vibration signal and the speed signal are received at the aforementioned FADEC. It should be noted that although the vibration signal and the speed signal can be received from different sources, they are both obtained at a common FADEC

At step 204, a target frequency for the engine 110 is determined based on the speed signal, via the FADEC. The speed signal, which is representative of the operating speed of the engine 110, is instructive regarding expected vibrations for the engine 110: engines operating at different speeds produce different levels of vibration, and regression algorithms and/or mechanical principles can be used to determine the target frequency for the engine 110. In some embodiments, the operating speed of the engine 110 is used to determine a frequency of revolution (e.g. revolutions per minute, or RPM) for a rotating component of the engine 110, and the primary frequency is determined by converting the frequency of revolution to a useable value, for example in Hertz (Hz).

At step 206, a centre frequency of a filtering system is altered so that a pass-band of the filtering system contains the target frequency. At step 208, the vibration signal is filtered with the filtering system to obtain a filtered vibration signal. Once the target frequency is determined, the filtering system can be used to isolate the vibrations in the vibration signal which are caused by the rotating component(s) in the engine 110. However, prior to filtering the vibration signal, the filtering system is altered. In some embodiments, the filtering system contains a band-pass filter, and the centre frequency of the band-pass filter is altered to contain the target frequency: that is to say, the band-pass filter is adjusted such that the pass-band of the filter spans a range of frequencies which contains the target frequency. In other embodiments, the centre frequency of the band-pass filter of the filtering system is substantially aligned with the target frequency. Once the filtering system is adequately adjusted, the vibration signal is filtered to obtain the filtered vibration signal, which contains substantially solely information relating to the vibrations produced by the rotating component(s) in the engine 110. In some embodiments, the band-pass filter is a narrow-band filter, for example which passes frequencies in a range of 10-20 Hz about the centre frequency. The filtering system can be composed of any suitable software and/or hardware components, as appropriate.

At step 210, an amplitude of vibration for the engine 110 is determined based on the filtered vibration signal. The filtered vibration signal can be analyzed to determine an amplitude of a peak of the filtered vibration signal at the target frequency. For example, the magnitude of a peak-to-peak amplitude for the filtered vibration signal can be measured. Alternatively, an average value for the amplitude of the filtered vibration signal at the target frequency over a certain period of time can be measured. For instance, a rolling-average measurement can be taken in a substantially continuous fashion.

In some embodiments, a vibration mode of the engine 110 is determined based on the filtered vibration signal. The filtered vibration signal can indicate that the engine 110 is vibrating in a normal mode, in a superposition of multiple normal modes, for example including one or more resonant frequencies, or can indicate some irregular mode of vibration. For example, a frequency of a peak of the filtered vibration signal can be compared to the target frequency of the engine 110, and if the frequencies are substantially aligned, it is determined that the engine 110 is vibrating in a normal mode. If the frequency of the peak and the target frequency of the engine 110 are not aligned, it is determined that the engine 110 is vibrating in some other mode.

In some embodiments, a phase of vibration for the engine 110 can also be determined. In one example, the phase of vibration is determined by comparing the frequency of the peak of the filtered vibration signal with a separate signal, for example which indicates the position of a "missing tooth" on a rotating component within the engine 110. Still other approaches for measuring the phase of vibration for the engine 110 are considered.

The amplitude and phase of vibration of the engine 110 can provide information about the state of operation of the engine 110. A certain vibration amplitude and/or phase of vibration can be expected of the engine 110 when in a substantially healthy state, and variance from that amplitude and/or phase of vibration can be understood to indicate mechanical wear and/or failure of the engine 110. For example, the vibration amplitude and/or phase of vibration of the engine 110 can indicate that maintenance is required. In another example, if the engine 110 in question is an engine which has a fan, such as a turbofan engine, the vibration amplitude and/or phase of vibration of the engine 110 can indicate that a "fan-blade-off event" has occurred, which is when one or more blades of the fan has detached itself from the fan. Still other inferences about the state of operation of the engine 110 can be made based on the vibration amplitude and/or phase of vibration.

Optionally, steps 212, 213, and 214 are performed. At step 212, the amplitude of vibration is compared to at least one predetermined threshold. The thresholds can include one or more warning thresholds, one or more danger thresholds, one or more panic thresholds, and the like. At step 213, a decision is made regarding whether the amplitude of vibration exceeds one of the thresholds. If the amplitude of vibration does not exceed any of the thresholds, the method 200 returns to a previous step, for example step 202. If the amplitude of vibration does exceed any one or more of the thresholds, the method 200 proceeds to step 214.

At step 214, an operational parameter of the engine 110 is adjusted based on the vibration amplitude of the engine 110. Upon determining that the vibration amplitude of the engine 110 exceeds any one or more of the thresholds, one or more operational parameters of the engine 110 are adjusted. An output power of the engine 110 can be adjusted, for instance to reduce the output power of the engine 110. In the claimed embodiment, the engine 110 is part of a group of engines operating in collaboration: the output power of the engine 110 can be reduced, and the output power of the remaining engines of the group can be increased to compensate. Other approaches for balancing multiple engine configurations are also considered. In other embodiments, a gear setting of the engine 110 can be adjusted, for example by activating a gear box. Still other approaches of adjusting operational parameters of the engine 110 are considered.

In addition, at step 214, an operator of the engine 110 is alerted based on the vibration amplitude of the engine 110. In some embodiments, a representation of the vibration amplitude and/or of the phase of vibration of the engine 110 can be displayed to the operator of the engine 110, for example via a screen or other display device. The representation of the vibration amplitude and/or the phase of vibration can include a textual or graphical display of the vibration amplitude and/or the phase of vibration. For example, a gauge or digital screen can display a numerical value for the vibration amplitude and/or the phase of vibration. In another example, the filtered vibration signal is displayed on a screen with one or more markers indicating the vibration amplitude and/or the phase of vibration. In a still further example, a signal light produces a first light signal when the vibration amplitude and/or phase of vibration is within tolerance, and a second light signal when the vibration amplitude and/or phase of vibration is outside tolerance. Still other representations of the vibration amplitude and/or phase of vibration are considered. For example, a visual alert, via a signal light, an auditory alert, via a siren or other sound-producing device, or any other kind of alert can be produced.

In still other embodiments, the occurrence of a fan-blade-off event is determined based on the filtered vibration signal. For example, if the filtered vibration signal is indicative of irregular vibration amplitudes, this can in turn indicate that a fan-blade-off event has occurred. In response thereto, an alert can be raised to the operator of the engine 110. In addition to reducing the output power of the engine 110 while increasing the output power of the remaining engines to compensate for shutdown or reduced output of the engine 110 in multiple engine configurations, one or more corrective measures can be implemented.

In receiving both the vibration signal and the speed signal at a common computing device, proper identification of the vibrations in the vibration signal produced by the engine 100 can be achieved, and extraneous vibrations filtered out. This, in turn, can assist in identifying the amplitude of the vibrations produced by components of the engine 110 and, optionally, the phase of vibration in the engine 110. Based on the determined amplitudes and/or phase of vibration, various countermeasures can be adopted, for instance to adjust the operation of the engine 110 and/or to alert an operator thereof.

The engine 110 has a plurality of spools, which can operate at different rotational speeds, and the method 200 is performed independently for each spool. Two independent speed signals, one for each spool, and a common vibration signal for the engine 110 as a whole are received at the FADEC. Two independent filtering processes are performed using two separate target frequencies, one for each spool and determined based on the rotational speeds of each spool.

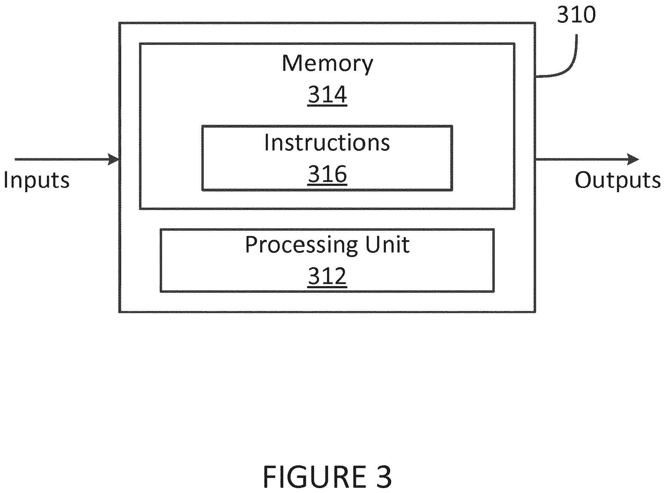

With reference to Figure 3, the method 200 may be implemented by a computing device 310, comprising a processing unit 312 and a memory 314 which has stored therein computer-executable instructions 316. For example, the controller 210 may be embodied as the computing device 310. The processing unit 312 may comprise any suitable devices configured to implement the method 200 such that instructions 316, when executed by the computing device 310 or other programmable apparatus, may cause the functions/acts/steps performed as part of the method 200 as described herein to be executed. The processing unit 312 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.
gate array (FPGA), a reconfigurable processor, other suitably programmed or programmable logic circuits, or any combination thereof.

The memory 314 may comprise any suitable known or other machine-readable storage medium. The memory 314 may comprise non-transitory computer readable storage medium, for example, but not limited to, an electronic, magnetic, optical, electromagnetic, infrared, or semiconductor system, apparatus, or device, or any suitable combination of the foregoing. The memory 314 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 314 may comprise any storage means (e.g., devices) suitable for retrievably storing machine-readable instructions 316 executable by processing unit 312.

It should be noted that the computing device 310 is implemented as part of a FADEC. In addition, it should be noted that the method 200 and, more generally, the techniques described herein can be performed substantially in real-time, during operation of the engine 110. For example, if the engine 110 is used as part of an aircraft, the monitoring of the engine 110 can be performed in real-time during a flight mission. The results of the monitoring can be reported to the operator and adjustments to the operational parameters of the engine 110 can also be performed in real-time. Thus, the computing device 310 can be used to dynamically resolve the vibration amplitudes for vibrations produced by the engine 110 in substantially real-time.

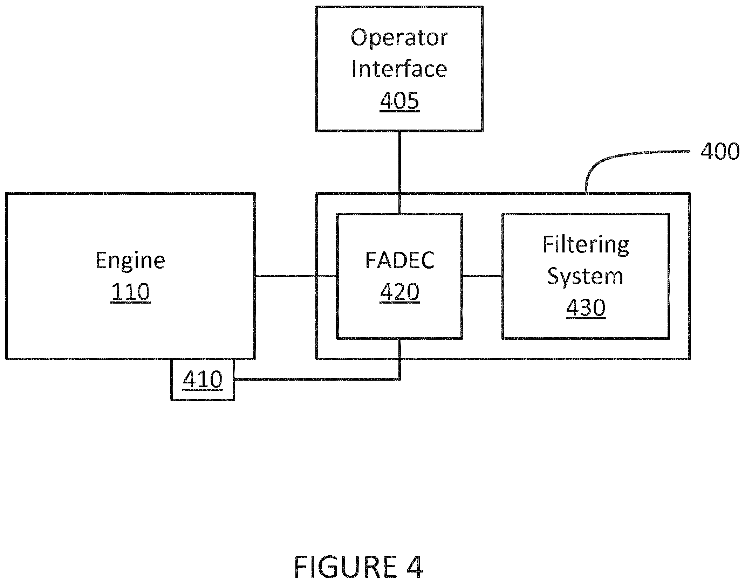

With reference to Figure 4 in addition to Figure 2, a vibration monitoring system 400 is illustrated, which is composed of a FADEC 420 and a filtering system 430. Affixed to or proximate the engine 110 are sensors 410, which can include any suitable number of sensors, including one or more unidirectional vibration sensors. The sensors 410 are communicatively coupled to the FADEC 420 for providing information to the FADEC 420. The FADEC 420 can also be coupled to the engine 110 for extracting other information from the engine 110 itself, and for controlling operation of the engine 110. An operator interface 405 can also be coupled to the FADEC 420, for instance to receiving inputs from an operator of the engine 110, and for presenting information to the operator of the engine 110.

The FADEC 420 is configured for receiving the vibration signal and the speed signal, in accordance with step 202. In some embodiments, the vibration signal and the speed signal are received from the sensors 410. In some other embodiments, the speed signal is derived within the FADEC 420 based on other information obtained from the sensors 410, for example a speed or torque for one of the shafts of the engine 110. The FADEC 420 is also configured for determining the target frequency of the engine 110 based on the speed signal, in accordance with step 204.

The FADEC 420 is configured for altering a centre frequency of the filtering system 430 so that a pass-band of the filtering system contains the target frequency of vibration, in accordance with step 206. The FADEC 420 can issue instructions to the filtering system 430 to alter the operation of the filtering system 430. In some embodiments, the filtering system 430 uses one or more hardware-based filters, which are adjustable, to filter the vibration signal. In some other embodiments, the filtering system 430 can be implemented using firmware or software means, for example within the FADEC 420. The filtering system 430 is configured for filtering the vibration signal to obtain the filtered vibration signal, in accordance with step 208.

Once the filtered vibration signal is obtained, the FADEC 420 is configured for determining an amplitude of vibration for the engine 110 based on the filtered vibration signal, in accordance with step 210. In some embodiments, the FADEC 420 further determines a phase of the vibration of the engine 110.

Once the amplitude(s) and/or phase of vibration of the engine 110 are determined, the FADEC 420 can optionally compare the amplitude and/or phase of vibration to one or more thresholds, and if the amplitude and/or phase of vibration is found to exceed any of the thresholds, an operational parameter of the engine 110 can be adjusted, for example by issuing commands to the engine 110, and/or alert the operator of the engine 110, for example via the operator interface 405, in accordance with steps 212, 213, and 214. In some embodiments, an output power or a gear setting for the engine 110 can be adjusted. In cases where the engine 110 is part of a multiple engine configuration, the FADEC 420 can instruct other engines and/or other FADECs to compensate for adjusted output of the engine 110. In other embodiments, the vibration amplitudes for the engine 110 and/or one or more alerts can be presented to the operator via the operator interface 405.

The methods and systems for monitoring vibration in an engine described herein may be implemented in a high level procedural or object oriented programming or scripting language, or a combination thereof, to communicate with or assist in the operation of a computer system, for example the computing device 310. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 312 of the computing device 310, to operate in a specific and predefined manner to perform the functions described herein, for example those described in the method 200.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

Various aspects of the methods and systems described herein may be used alone, in combination, or in a variety of arrangements not specifically discussed in the embodiments described in the foregoing and is therefore not limited in its application to the details and arrangement of components set forth in the foregoing description or illustrated in the drawings. It should be noted and understood that there can be improvements and modifications made of the present invention described in detail above without departing from the scope of the invention as set forth in the accompanying claims. The scope of the following claims should not be limited by the embodiments set forth in the examples, but should be given the broadest reasonable interpretation consistent with the description as a whole.

## Claims

1. A method (200) for monitoring vibration in an engine (110), comprising:
receiving, at a full-authority digital engine control (FADEC) system (420), a vibration signal from at least one sensor (410) coupled to the engine (110), **characterised in that** the method further comprises:
receiving, at the FADEC system (420), a first speed signal representative of an operating speed of a first spool of the engine (110), and a second speed signal representative of an operating speed of a second spool of the engine (110);
determining, at the FADEC system (420), a first target frequency of the engine (110) based on the first speed signal, and a second target frequency of the engine (110) based on the second speed signal;
altering, at the FADEC system (420), a center frequency of a first filtering system (430) so that a pass-band of the first filtering system (430) contains the first target frequency, and a center frequency of a second filtering system so that a pass-band of the second filtering system contains the second target frequency;
filtering, at the FADEC system (420), the vibration signal with the first filtering system (430) to obtain a first filtered vibration signal, and the vibration signal with the second filtering system to provide a second filtered vibration signal;
determining, at the FADEC system (420), an amplitude of the first filtered vibration signal and an amplitude of the second filtered vibration signal;
comparing the amplitude of the first filtered vibration signal to a first predetermined vibration threshold, and comparing the amplitude of the second filtered vibration signal to a second predetermined vibration threshold; and
producing an alert in response to determining that the amplitude of the first filtered vibration signal exceeds the first predetermined vibration threshold, and producing an alert in response to determining that the amplitude of the second filtered vibration signal exceeds the second predetermined vibration threshold,
wherein the engine (110) is part of a group of engines operating in collaboration, and the method further comprises reducing an output power of the engine (110) and increasing an output power of the other engines of the group, using the FADEC system (420), based on the amplitude of the first filtered vibration signal or based on the amplitude of the second filtered vibration signal.

2. The method (200) of claim 1, further comprising adjusting at least one further operational parameter of the engine (110) using the FADEC system (420) based on the amplitude of the first filtered vibration signal or based on the amplitude of the second filtered vibration signal.

3. The method (200) of claim 1 or 2, wherein the determining of the amplitude of the first filtered vibration signal comprises determining a magnitude of a peak-to-peak amplitude of the first filtered vibration signal, and the determining of the amplitude of the second filtered vibration signal comprises determining a magnitude of a peak-to-peak amplitude of the second filtered vibration signal.

4. The method (200) of any preceding claim, further comprising:
determining, based on any one of the first and second filtered vibration signals, whether a fan-blade-off event has occurred, the fan-blade-off event indicative of a mechanical failure of a fan of the engine (110); and
in response to determining that the fan-blade-off event has occurred, implementing at least one corrective measure for the engine (110).

5. The method (200) of claim 4, wherein the alert comprises an indication of the fan-blade-off event.

6. The method (200) of any preceding claim, further comprising determining, at the FADEC system (420), a phase of vibration for the engine (110) based on the first and second filtered vibration signals, and the first and second target frequencies of the engine (110).

7. The method (200) of claim 5, wherein the determining of the phase of vibration comprises comparing a peak frequency of the first and second filtered vibration signal with a signal indicative of a position of a reference marker of the engine (110).

8. A full-authority digital engine control (FADEC) system (420) for monitoring vibration in an engine (110), comprising:
a processing unit (312); and
a non-transitory computer-readable memory (314) communicatively coupled to the processing unit (312) and comprising computer-readable program instructions (316) executable by the processing unit (312) for carrying out the method of any preceding claim.

## Patentansprüche

1. Verfahren (200) zum Überwachen von Vibration in einem Motor (110), umfassend:
Empfangen eines Vibrationssignals von mindestens einem an den Motor (110) gekoppelten Sensor (410) an einem System (420) zur vollautorisierten digitalen Motorsteuerung (full-authority digital engine control - FADEC), **dadurch gekennzeichnet, dass** das Verfahren ferner Folgendes umfasst:
Empfangen eines ersten Geschwindigkeitssignals, das für eine Betriebsgeschwindigkeit einer ersten Spule des Motors (110) steht, und eines zweiten Geschwindigkeitssignals, das für eine Betriebsgeschwindigkeit einer zweiten Spule des Motors (110) steht, an dem FADEC-System (420);
Bestimmen einer ersten Zielfrequenz des Motors (110) basierend auf dem ersten Geschwindigkeitssignal und einer zweiten Zielfrequenz des Motors (110) basierend auf dem zweiten Geschwindigkeitssignal an dem FADEC-System (420);
Ändern einer Mittenfrequenz eines ersten Filtersystems (430), sodass ein Durchlassband des ersten Filtersystems (430) die erste Zielfrequenz enthält, und einer Mittenfrequenz eines zweiten Filtersystems, sodass ein Durchlassband des zweiten Filtersystems die zweite Zielfrequenz enthält, an dem FADEC-System (420);
Filtern des Vibrationssignals mit dem ersten Filtersystem (430), um ein erstes gefiltertes Vibrationssignal zu erhalten, und des Vibrationssignals mit dem zweiten Filtersystem, um ein zweites gefiltertes Vibrationssignal bereitzustellen, an dem FADEC-System (420);
Bestimmen einer Amplitude des ersten gefilterten Vibrationssignals und einer Amplitude des zweiten gefilterten Vibrationssignals an dem FADEC-System (420);
Vergleichen der Amplitude des ersten gefilterten Vibrationssignals mit einem ersten vorbestimmten Vibrationsschwellenwert und Vergleichen der Amplitude des zweiten gefilterten Vibrationssignals mit einem zweiten vorbestimmten Vibrationsschwellenwert; und
Erzeugen einer Warnung als Reaktion auf ein Bestimmen, dass die Amplitude des ersten gefilterten Vibrationssignals den ersten vorbestimmten Vibrationsschwellenwert überschreitet, und Erzeugen einer Warnung als Reaktion auf ein Bestimmen, dass die Amplitude des zweiten gefilterten Vibrationssignals den zweiten vorbestimmten Vibrationsschwellenwert überschreitet,
wobei der Motor (110) Teil einer Gruppe von Motoren ist, die zusammenwirken, und das Verfahren ferner Reduzieren einer Ausgangsleistung des Motors (110) und Erhöhen einer Ausgangsleistung der anderen Motoren der Gruppe unter Verwendung des FADEC-Systems (420) basierend auf der Amplitude des ersten gefilterten Vibrationssignals oder basierend auf der Amplitude des zweiten gefilterten Vibrationssignals umfasst.

2. Verfahren (200) nach Anspruch 1, ferner umfassend Einstellen mindestens eines weiteren Betriebsparameters des Motors (110) unter Verwendung des FADEC-Systems (420) basierend auf der Amplitude des ersten gefilterten Vibrationssignals oder basierend auf der Amplitude des zweiten gefilterten Vibrationssignals.

3. Verfahren (200) nach Anspruch 1 oder 2, wobei das Bestimmen der Amplitude des ersten gefilterten Vibrationssignals Bestimmen einer Größe einer Spitze-zu-Spitze-Amplitude des ersten gefilterten Vibrationssignals umfasst und das Bestimmen der Amplitude des zweiten gefilterten Vibrationssignals Bestimmen einer Größe einer Spitze-zu-Spitze-Amplitude des zweiten gefilterten Vibrationssignals umfasst.

4. Verfahren (200) nach einem der vorstehenden Ansprüche, ferner umfassend:
Bestimmen, basierend auf einem von dem ersten und dem zweiten gefilterten Vibrationssignal, ob ein Fan-Blade-Off-Ereignis aufgetreten ist, wobei das Gebläseschaufel-Abschaltungsereignis einen mechanischen Ausfall eines Gebläses des Motors (110) angibt; und
als Reaktion auf das Bestimmen, dass das Fan-Blade-Off-Ereignis aufgetreten ist, Umsetzen mindestens einer Korrekturmaßnahme für den Motor (110).

5. Verfahren (200) nach Anspruch 4, wobei die Warnung einen Hinweis auf das Fan-Blade-Off-Ereignis umfasst.

6. Verfahren (200) nach einem der vorstehenden Ansprüche, ferner umfassend Bestimmen einer Vibrationsphase für den Motor (110) basierend auf dem ersten und dem zweiten gefilterten Vibrationssignal und der ersten und der zweiten Zielfrequenz des Motors (110) an dem FADEC-System (420).

7. Verfahren (200) nach Anspruch 5, wobei das Bestimmen der Vibrationsphase Vergleichen einer Spitzenfrequenz des ersten und des zweiten gefilterten Vibrationssignals mit einem Signal, das eine Position einer Referenzmarkierung des Motors (110) angibt, umfasst.

8. System (420) zur vollautorisierten digitalen Motorsteuerung (FADEC) zum Überwachen von Vibration in einem Motor (110), umfassend:
eine Verarbeitungseinheit (312); und
einen nichtflüchtigen computerlesbaren Speicher (314), der kommunikativ an die Verarbeitungseinheit (312) gekoppelt ist und computerlesbare Programmanweisungen (316) umfasst, die durch die Verarbeitungseinheit (312) ausführbar sind, um das Verfahren nach einem der vorstehenden Ansprüche auszuführen.

## Revendications

1. Procédé (200) de surveillance de vibrations dans un moteur (110), comprenant :
la réception, au niveau d'un système de commande numérique de moteur à pleine autorité (FADEC) (420), d'un signal de vibration provenant d'au moins un capteur (410) couplé au moteur (110), **caractérisé en ce que** le procédé comprend en outre :
la réception, au niveau du système FADEC (420), d'un premier signal de vitesse représentatif d'une vitesse de fonctionnement d'un premier corps du moteur (110), et d'un second signal de vitesse représentatif d'une vitesse de fonctionnement d'un second corps du moteur (110) ;
la détermination, au niveau du système FADEC (420), d'une première fréquence cible du moteur (110) sur la base du premier signal de vitesse, et d'une seconde fréquence cible du moteur (110) sur la base du second signal de vitesse ;
la modification, au niveau du système FADEC (420), d'une fréquence centrale d'un premier système de filtrage (430) de sorte qu'une bande passante du premier système de filtrage (430) contienne la première fréquence cible, et d'une fréquence centrale d'un second système de filtrage de sorte qu'une bande passante du second système de filtrage contienne la seconde fréquence cible ;
le filtrage, au niveau du système FADEC (420), du signal de vibration avec le premier système de filtrage (430) pour obtenir un premier signal de vibration filtré, et du signal de vibration avec le second système de filtrage pour fournir un second signal de vibration filtré ;
la détermination, au niveau du système FADEC (420), d'une amplitude du premier signal de vibration filtré et d'une amplitude du second signal de vibration filtré ;
la comparaison de l'amplitude du premier signal de vibration filtré à un premier seuil de vibration prédéterminé, et la comparaison de l'amplitude du second signal de vibration filtré à un second seuil de vibration prédéterminé ; et
la production d'une alerte en réponse à la détermination que l'amplitude du premier signal de vibration filtré dépasse le premier seuil de vibration prédéterminé, et la production d'une alerte en réponse à la détermination que l'amplitude du second signal de vibration filtré dépasse le second seuil de vibration prédéterminé,
dans lequel le moteur (110) fait partie d'un groupe de moteurs fonctionnant en collaboration, et le procédé comprend en outre la réduction d'une puissance de sortie du moteur (110) et l'augmentation d'une puissance de sortie des autres moteurs du groupe, à l'aide du système FADEC (420), sur la base de l'amplitude du premier signal de vibration filtré ou sur la base de l'amplitude du second signal de vibration filtré.

2. Procédé (200) selon la revendication 1, comprenant en outre l'ajustement d'au moins un autre paramètre opérationnel du moteur (110) à l'aide du système FADEC (420) sur la base de l'amplitude du premier signal de vibration filtré ou sur la base de l'amplitude du second signal de vibration filtré.

3. Procédé (200) selon la revendication 1 ou 2, dans lequel la détermination de l'amplitude du premier signal de vibration filtré comprend la détermination d'une grandeur d'une amplitude crête à crête du premier signal de vibration filtré, et la détermination de l'amplitude du second signal de vibration filtré comprend la détermination d'une grandeur d'une amplitude crête à crête du second signal de vibration filtré.

4. Procédé (200) selon une quelconque revendication précédente, comprenant en outre :
le fait de déterminer, sur la base de l'un quelconque des premier et second signaux de vibration filtrés, si un événement d'arrêt des pales de soufflante s'est produit, l'événement d'arrêt des pales de soufflante indiquant une défaillance mécanique d'une soufflante du moteur (110) ; et
en réponse à la détermination que l'événement d'arrêt des pales de soufflante s'est produit, la mise en œuvre d'au moins une mesure corrective pour le moteur (110).

5. Procédé (200) selon la revendication 4, dans lequel l'alerte comprend une indication de l'événement d'arrêt des pales de soufflante.

6. Procédé (200) selon une quelconque revendication précédente, comprenant en outre la détermination, au niveau du système FADEC (420), d'une phase de vibration pour le moteur (110) sur la base des premier et second signaux de vibration filtrés, et des première et seconde fréquences cibles du moteur (110).

7. Procédé (200) selon la revendication 5, dans lequel la détermination de la phase de vibration comprend la comparaison d'une fréquence de crête des premier et second signaux de vibration filtrés avec un signal indicatif d'une position d'un marqueur de référence du moteur (110).

8. Système de commande numérique de moteur à pleine autorité (FADEC) (420) pour surveiller les vibrations dans un moteur (110), comprenant :
une unité de traitement (312) ; et
une mémoire non transitoire lisible par ordinateur (314) couplée en communication à l'unité de traitement (312) et comprenant des instructions de programme lisibles par ordinateur (316) exécutables par l'unité de traitement (312) pour exécuter le procédé selon une quelconque revendication précédente.
